# EUROPÄISCHE PATENTSCHRIFT

(11) **EP 1 402 163 B1**
(45) Veröffentlichungstag und Bekanntmachung des Hinweises auf die Patenterteilung: **24.11.2004**
(21) Anmeldenummer: 02745113.7
(22) Anmeldetag: 01.06.2002
(51) Int. Cl.: F02D 41/18, F02D 33/02

(54) **VERFAHREN UND VORRICHTUNG ZUR STEUERUNG EINER AUFGELADENEN BRENNKRAFTMASCHINE**
METHOD AND DEVICE FOR CONTROLLING A SUPERCHARGED INTERNAL COMBUSTION ENGINE
PROCEDE ET DISPOSITIF DE COMMANDE D'UN MOTEUR A COMBUSTION INTERNE SURALIMENTE

(30) Priorität: 15.06.2001 DE 10129037
(43) Veröffentlichungstag der Anmeldung: 31.03.2004
(73) Patentinhaber: ROBERT BOSCH GMBH, 70442 Stuttgart (DE)
(72) Erfinder: WILD, Ernst, 71730 Oberriexingen (DE); HESS, Werner, 70499 Stuttgart (DE)
(86) Internationale Anmeldenummer: PCT/DE2002/002016
(87) Internationale Veröffentlichungsnummer: WO 2002/103184

(56) Entgegenhaltungen:
- EP-A- 1 083 320
- DE-A- 3 515 046
- DE-A- 19 608 630
- DE-A- 19 740 916

## Beschreibung

### Stand der Technik

Die Erfindung betrifft ein Verfahren und eine Vorrichtung zur Steuerung einer aufgeladenen Brennkraftmaschine.

Bei modernen Motorsteuerungen wird aus einer vom Fahrer oder von externen Steuersystemen vorgegebenen Sollgröße bezüglich einer Ausgangsgröße der Brennkraftmaschine wie Drehmoment, Leistung, etc. eine Sollgröße für die Luftzufuhr zur Brennkraftmaschine, z.B. die Füllung (Luftmasse) im Brennraum, gebildet. Diese stellt wiederum die Basis für die Berechnung eines Sollwinkels (Sollstellung) der Drosselklappe der Brennkraftmaschine dar. Auf der anderen Seite wird mittels einer Messeinrichtung eine Istgröße für die Luftzufuhr (z.B. die Istfüllung der Brennkraftmaschine) berechnet. Dieser Wert bildet Basis für den Istwert der Ausgangsgröße der Brennkraftmaschine, beispielsweise das Istmoment. Ein Beispiel für eine derartige Vorgehensweise ist für eine momentenbasierte Motorsteuerung, bei welcher ein Sollmoment vorgegeben und durch Umrechnung in eine Sollluftfüllung bzw. einen Sollwinkel für die Drosselklappe eingestellt wird, aus der DE-A 196 18 385 bekannt.

Aufgrund von Toleranzen in der die Istgröße messenden Messeinrichtung (z.B. einem Luftmassenmesser) sowie im Berechnungspfad zur Bestimmung der Istgröße kann es zu einer toleranzenbedingten Abweichung zwischen Ist- und Sollwert (insbesondere der Ausgangsgröße wie des Moments) kommen. Aus diesem Grunde wird in der DE-A1 197 40 918 abhängig von der Differenz zwischen dem vom Luftmassenmesser gemessenen Luftfluss und einem auf der Basis der Drosselklappenstellung gemessenen Luftfluss wenigstens ein Korrekturwert gebildet, welcher zur Korrektur des Sollwertes für die Luftzufuhr oder für den Drosselklappenwinkel zur Anpassung des Drosselklappensystems an das Luftmassenmessersystem eingerechnet wird. Mit anderen Worten wird also die Drosselklappeneinstellung so verändert, dass sich ein neuer Drosselklappensollwert ergibt, bei welchem keine Abweichungen zwischen luftmassenmesserbasiertem Luftfluss und drosselklappenstellungsbasiertem Luftfluss sich ergeben.

Bei aufgeladenen Motoren, d. h. bei Motoren mit Turboladern, ist im Ladebereich die Drosselklappe im Wesentlichen ganz geöffnet. Eine weitere Erhöhung der Luftzufuhr über die Drosselklappe ist daher nicht mehr möglich. Die oben beschriebene Vorgehensweise zum Abgleich von Abweichungen zwischen Soll- und Istwerten arbeitet daher nicht mehr zufriedenstellend, so dass sich eine ungewollte Abweichung zwischen Istgrößen und Solleinstellung einstellen kann.

Aus der DE-A 196 08 630 ist ein Beispiel bekannt, bei welchem aus einer vorgegebenen Sollfüllung für die Brennkraftmaschine einerseits ein Drosselklappenwinkelsollwert, andererseits ein Sollladedruckwert abgeleitet wird. Dabei wird der Druckabfall über der Drosselklappe vorgegeben.

### Vorteile der Erfindung

Durch die Anpassung des Ladedrucks, insbesondere des Ladedrucksollwertes, durch einen Abgleichfaktor, welcher die Toleranz zwischen der Istwerterfassung und der Sollwerteinstellung über die Drosselklappe repräsentiert, wird sichergestellt, dass die Sollvorgabe auch im Ladebereich genau eingehalten wird und die toleranzbedingte Abweichung zwischen Ist- und Sollwert verschwindet.

In besonders vorteilhafter Weise wird durch die genaue Einhaltung der Sollvorgabe auch im Ladebereich eine präzise Steuerung des Drehmoments des Motors beim Schalten ermöglicht. Dies wiederum führt in vorteilhafter Weise zu einer Vermeidung der Beeinträchtigung des Fahrverhaltens beim Schalten sowie bei einer Vermeidung einer Überbeanspruchung des Getriebes.

Im Ganzen wird in vorteilhafter Weise der Betrieb eines aufgeladenen Motors optimiert.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt dabei ein Übersichtsschaltbild einer Steuereinheit zur Steuerung einer aufgeladenen Brennkraftmaschine. In den Figuren 2 und 3 sind Ablaufdiagramme skizziert, welche Programme repräsentieren, die im Mikrocomputer der Steuereinheit implementiert sind und die die Umsetzung des Sollwertes in einen Solldrosselklappenwinkel und einen Sollladedruck unter Abgleich der Ist- und Sollwerte beschreiben.

### Beschreibung von Ausführungsbeispielen

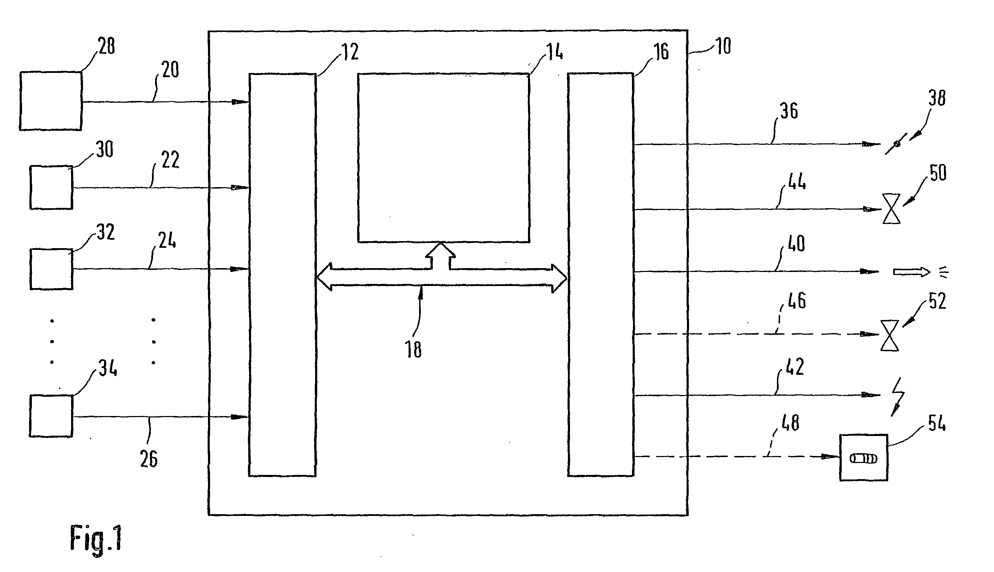

Figur 1 zeigt eine Steuereinrichtung zur Steuerung des Drehmoments bzw. der Leistung einer Brennkraftmaschine. Die Steuereinheit (10) umfaßt dabei eine Eingangsschaltung (12), wenigstens einen Mikrocomputer (14) und eine Ausgangsschaltung (16). Eingangsschaltung, Mikrocomputer und Ausgangsschaltung sind über ein Bussystem (18) zum gegenseitigen Datenaustausch verbunden. Der Eingangsschaltung (12) der Steuereinheit (10) sind Eingangsleitungen (20, 22 und 24-26) zugeführt. In einem bevorzugten Ausführungsbeispiel sind diese Eingangsleitungen in einem Bussystem, z. B. CAN, zusammengefaßt. Dabei verbindet die Eingangsleitung (20) die Steuereinheit (10) mit einer Meßeinrichtung (28) zur Erfassung des zugeführten Luftflusses, z.B. einem Luftmassenmesser. Die Eingangsleitung (22) verbindet die Steuereinheit (10) mit einer Meßeinrichtung (30) zur Erfassung des Betätigungsgrades eines vom Fahrer betätigbaren Bedienelements, z.B. eines Fahrpedals. Ferner sind Meßeinrichtungen (32-34) vorgesehen, die Betriebsgrößen der Brennkraftmaschine und/oder des Fahrzeugs erfassen und entsprechende Meßsignale über die Leitungen (24-26) zur Steuereinheit (10) übermitteln. Beispiel für derartige Betriebsgrößen sind Drosselklappenwinkel, Motordrehzahl, etc. Über Ausgangsleitungen und die Ausgangsschaltung (16) steuert die Steuereinheit (10) die Brennkraftmaschine. Über eine erste Ausgangsleitung (36) wird eine elektrisch betätigbare Drosselklappe (38) zur Beeinflussung der Luftzufuhr zur Brennkraftmaschine betätigt. Ferner wird über weitere Ausgangsleitungen (40, 42) die Kraftstoffzufuhr sowie der Zündwinkel einstellt. Ferner wird über die Leitung 44 ein Lader (50) gesteuert, Ferner sind je nach Ausstattung der Brennkraftmaschine Ausgangsleitungen (46, 48) vorgesehen, über die die Steuereinheit (10) ein Tankentlüftungsventil, ein Abgasrückführventil (52), den Antrieb (54) für eine Nockenwellenverstellung, etc. ansteuert.

Im bevorzugten Ausführungsbeispiel einer momentenbasierten Motorsteuerung wird, wie aus dem eingangs genannten Stand der Technik bekannt, das vorgegebene Sollmoment in eine Sollfüllung umgerechnet. Daraus wiederum wird ein Solldrosselklappenwinkel bestimmt, welcher durch Betätigen der Drosselklappe im Rahmen einer Lageregelung eingestellt wird. Ergänzend zu dieser Vorgehensweise wird, wie ebenfalls aus dem eingangs genannten Stand der Technik bekannt, bei einem aufgeladenem Motor aus dem aus der Sollfüllung bestimmten Sollsaugrohrdruck und einem vorgegebenen Druckverhältnis über der Drosselklappe ein Sollladedruck für die Ladedruckregelung berechnet, welcher im Rahmen der Ladedruckregelung eingestellt wird. Der Sollladedruck wird also aus Sollsaugrohrdruck und vorgegebenem Solldruckverhältnis an der Drosselklappe gebildet. Letzteres wird auf der Basis des Sollsaugrohrdruckwertes und/oder des Füllungswertes und der Motordrehzahl bestimmt und liegt üblicherweise zwischen 0,95 und 1.

Zur Behebung des oben angesprochenen Problems wird der abhängig von dem gemessenen Luftfluss und die aus der Drosselklappenstellung abgeleiteten Luftfluss gebildete Korrekturfaktor zur Korrektur des Sollladedrucks verwendet. Der auf diese Weise korrigierte Sollladedruck, der nachfolgend nach unten auf den Grundladedruck und nach oben auf den maximalen Ladedruck begrenzt wird, wird dann durch die Ladedruckregelung und die Steuerung des Turboladers eingestellt. Wesentlich ist, dass durch diese Vorgehensweise eine gute Übereinstimmung des Ist- und des Sollwertes, insbesondere des Istmomentes und des Sollmomentes erzielt wird. Toleranzbedingte Abweichungen zwischen diesen Größen werden vermieden.

Im bevorzugten Ausführungbeispiel, welches auch nachfolgend beschrieben ist, wird als Luftfluss der der Brennkraftmaschine zugeführte Luftmassenstrom durch einen Luftmassenmesser gemessenen und der Luftmassenstrom über der Drosselklappe abhängig von der Drosselklappenstellung berechnet. In anderen Ausführung wird als Luftfluss ein Volumenstrom erfasst oder der Luftfluss (Luftmassenstrom oder Volumenstrom) aus einem Saugrohrdruckwert abgeleitet.

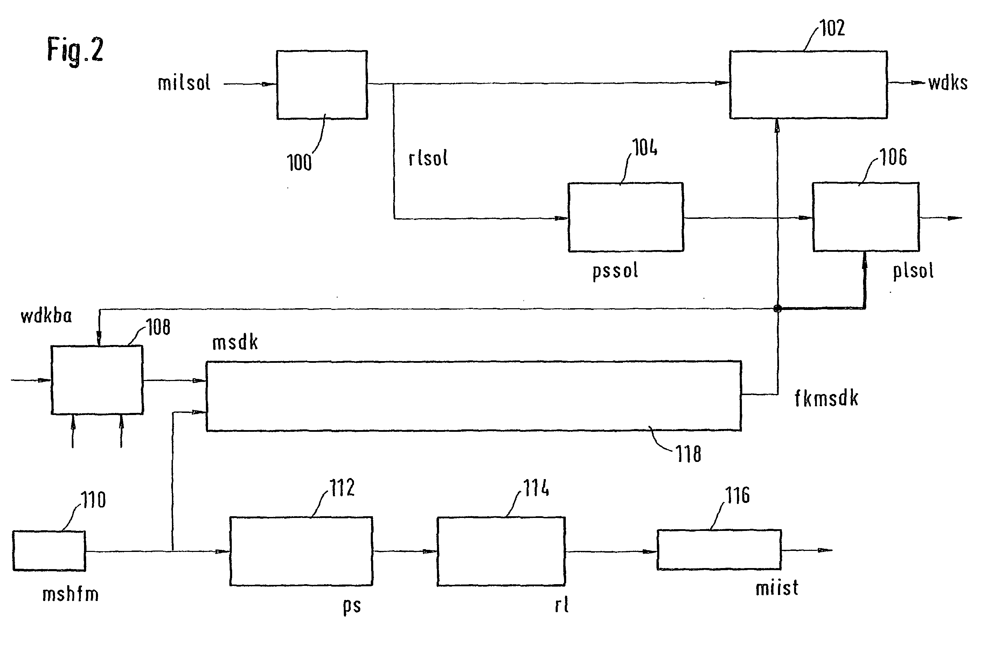

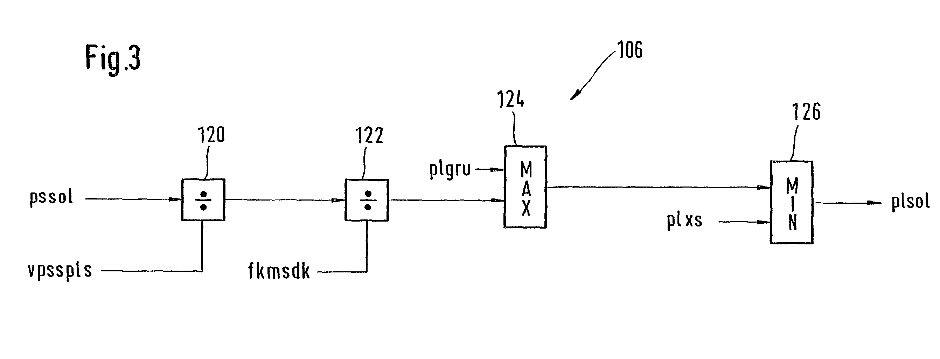

Die oben beschriebene Vorgehensweise wird als Rechnerprogramm des Mikrocomputers 14 der Steuereinheit 10 realisiert. Dieses Rechnerprogramm ist anhand der Figuren 2 und 3 im Rahmen eines Ablaufdiagramms skizziert, wobei die dort dargestellten Blöcke einzelne Programme, Programmteile oder Programmschritte repräsentieren, während die Verbindungsleitungen den Informationsfluss darstellen.

Gemäß Figur 2 wird zunächst das vorgegebene Sollmoment misoll gemäß der bekannten Vorgehensweise im Schritt 100 in einen Sollfüllungswert rlsoll umgesetzt. Dieser wird dann im Schritt 102 ebenfalls beispielsweise nach Maßgabe der bekannten Vorgehensweise in einen Solldrosselklappenwinkelwert wdks umgewandelt, welcher durch die nachfolgende, nicht dargestellte Lageregelung unter Ansteuerung der elektrisch betätigbaren Drosselklappe eingestellt wird. Parallel dazu wird im Schritt 104 ebenfalls nach der aus dem Stand der Technik bekannten Vorgehensweise ein Sollsaugrohrdruckwert pssoll bestimmt in Abhängigkeit des vorgegebenen Sollfüllungswerts rlsoll. Abhängig vom Sollsaugrohrdruckwert wird dann im Schritt 106 ein Sollladedruckwert plsoll berechnet, welcher im Rahmen der Ladedruckregelung durch entsprechende Steuerung des Turboladers eingestellt wird. Die genaue Vorgehensweise zur Berechnung des Sollladedrucks aus dem Sollsaugrohrdruck ist anhand des nachfolgenden Flussdiagramms der Figur 3 näher skizziert.

Ferner wird im Schritt 108 ebenfalls beispielsweise nach Maßgabe der im Stand der Technik bekannten Vorgehensweise auf der Basis des Drosselklappenwinkels wdkba sowie weiterer Betriebsgrößen wie beispielsweise Saugrohrdruck, Temperaturgrößen, etc. der auf der Drosselklappenwinkelbasis berechnete Luftmassenstrom msdk gebildet. Ferner wird durch einen Luftmassenmesser 110 der Luftmassenstrom mshfm gemessen. Aus diesem Luftmassenstrom wird ebenfalls in bekannter Weise durch ein Saugrohrmodell 112 der Saugrohrdruck ps, im darauffolgenden Schritt 114 aus dem Saugrohrdruck ps die Istfüllung rl und aus dieser nach Schritt 116 das Istmoment miist berechnet. Auf der Basis des Luftmassenstroms msdk, der auf Drosselklappenbasis berechnet wurde sowie des gemessenen Luftmassenstroms mshfm wird im Abgleichschritt 118 ein Korrekturfaktor fkmsdk gebildet, welcher die Abweichung zwischen den beiden Luftmassenströmen darstellt. Dieser Abgleichfaktor wird zum einen zur Korrektur des auf Drosselklappenwinkelbasis berechneten Luftmassenstroms msdk dem Schritt 108, zum anderen zur Korrektur der Drosselklappeneinstellung dem Schritt 102 (wie aus dem Stand der Technik bekannt) sowie zur Korrektur des Sollladedrucks plsoll dem Schritt 106 zugeführt.

In Figur 3 ist ein Ablaufdiagramm dargestellt, welches den oben skizzierten Schritt 106 detaillierter darstellt. Zunächst wird der Sollsaugrohrdruckwert, der im Schritt 104 bestimmt wurde, in einer Verknüpfungsstelle 120 mit dem Solldruckverhältnis über der Drosselklappe dividiert. Das Solldruckverhältnis über der Drosselklappe wird nach Maßgabe eines Kennfeldes wiederum aus Sollsaugrohrdruck und Drehzahl bestimmt und beträgt in der Regel zwischen 0,95 und 1,0. Danach wird in einer weiteren Verknüpfungsstelle 122 das Ergebnis der Division des Schritts 120 mit dem Abgleichfaktor fkmsdk dividiert. Der abgeglichene Wert wird dann im Rahmen der Maximalwertauswahl 124 auf den Grundladedruck plgru begrenzt. Dieser Grundladedruck stellt dabei den Ladedruck dar, der ohne Ladedruckregelung aufgrund der Luftströmung im Ansaugrohr sich ergibt. Er wird einer vorgegebenen Tabelle entnommen. Der nach unten begrenzte Sollwert wird dann im Rahmen der Minimalwertauswahl 126 auf einen vorgegebenen maximalen Ladesolldruck plxs begrenzt. Das Ergebnis ist der Sollladedruck plsoll, welcher im Rahmen der Ladedruckregelung durch Steuerung des Laders eingestellt wird.

Anhand der Figuren 2 und 3 wurde ein bevorzugtes Ausführungsbeispiel des erfindungsgemäßen Gedankens dargestellt, der darin besteht, den Sollladedruck auf der Basis einer Abweichung zwischen dem berechneten Luftfluss über das Drosselventil und dem Istluftfluss zu korrigieren. In anderen Ausführungsbeispielen werden andere Ausgestaltungen angewendet. Beispielsweise erfolgt die Korrektur mit dem Abgleichfaktor nach den Begrenzungen oder es wird eine Korrektur des Sollsaugrohrdrucks oder des Solldruckverhältnisses mit dem Abgleichfaktor vorgenommen. In anderen Ausführungsbeispielen wird nicht der Sollsaugrohrdruck zur Bestimmung des Solldruckverhältnisses, sondern die Sollfüllung herangezogen, wie es z.B. im eingangs genannten Stand der Technik der Fall ist. Darüber hinaus sind die mathematischen Operationen der Division in den Schritten 120 und 122 nicht zwangsläufig, an ihrer Stelle können auch Multiplikationen oder Additionen verwendet werden.

## Patentansprüche

1. Verfahren zur Steuerung einer aufgeladenen Brennkraftmaschine, wobei abhängig von einem Vorgabewert die Stellung der Drosselklappe eingestellt wird und abhängig von einem Solldruck der Ladedruck gesteuert wird, wobei ferner der Luftfluss zur Brennkraftmaschine über der Drosselklappe bestimmt wird sowie der zugeführte Luftfluss gemessen wird, wobei ein Faktor bestimmt wird, welcher abhängig ist von der Abweichung zwischen dem über der Drosselklappe berechneten und dem gemessenen Luftfluss, **dadurch gekennzeichnet, dass** bei der Steuerung des Ladedrucks dieser Faktor berücksichtigt wird.

2. Verfahren nach Anspruch 1, **dadurch gekennzeichnet, dass** der Sollladedruck abhängig von dem aus dem Vorgabewert abgeleiteten Sollsaugrohrdruck unter Berücksichtigung eines Solldruckverhältnisses gebildet wird.

3. Verfahren nach einem der vorhergehenden Ansprüche, **dadurch gekennzeichnet, dass** der Sollladedruck, der aus Sollsaugrohrdruck und Solldruckverhältnis über der Drosselklappe gebildet wird, mit dem Abgleichfaktor korrigiert wird.

4. Verfahren nach einem der Ansprüche 2 oder 3, **dadurch gekennzeichnet, dass** der korrigierte Sollladedruck auf einen Maximalwert und/oder Minimalwert begrenzt wird.

5. Verfahren nach einem der vorhergehenden Ansprüche, **dadurch gekennzeichnet, dass** der Abgleichfaktor zur Korrektur des Solleinstellwertes für die Drosselklappe und/oder zur Korrektur des abhängig von der Drosselklappenstellung berechneten Luftflusses dient.

6. Verfahren nach einem der vorhergehenden Ansprüche, **dadurch gekennzeichnet, dass** der gemessene Luftfluss der durch einen Luftmassenmesser gemessene zugeführte Luftmassenstrom ist, der Luftfluss über der Drosselklappe der aus der Drosselklappenstellung abgeleitete Luftmassenstrom ist.

7. Vorrichtung zur Steuerung einer aufgeladenen Brennkraftmaschine, mit einer Steuereinheit, welche auf der Basis von Vorgabewerten die Luftzufuhr zur Brennkraftmaschine und den Ladedruck einstellt, die Steuereinheit Mittel umfasst, welche auf der Basis der Drosselklappenstellung den Luftfluss über der Drosselklappe bestimmen und welche den zur Brennkraftmaschine zugeführten Luftfluss messen, wobei abhängig von der Abweichung zwischen den beiden Luftflusswerten ein Faktor gebildet wird, **dadurch gekennzeichnet, dass** die Steuereinheit Mittel umfasst, welche den Faktor bei der Steuerung des Ladedrucks berücksichtigen.

8. Computerprogramm mit Programmcodemitteln, um alle Schritte von jedem der Ansprüche 1 bis 5 durchzuführen, wenn das Programm auf einem Computer ausgeführt wird.

9. Computerprogrammprodukt mit Programmcodemitteln, die auf einem computerlesbaren Datenträger gespeichert sind, um das Verfahren nach einem der Ansprüche 1 bis 5 durchzuführen, wenn das Programmprodukt auf einem Computer ausgeführt wird.

## Claims

1. Method for controlling a supercharged internal combustion engine, in which the position of the throttle valve is set as a function of a predetermined value and the boost pressure is controlled as a function of a desired pressure, and in which, furthermore, the flow of air to the internal combustion engine via the throttle valve is determined, and the airflow supplied is measured, with a factor which is dependent on the deviation between the calculated airflow across the throttle valve and the measured airflow being determined, **characterized in that** this factor is taken into account when controlling the boost pressure.

2. Method according to Claim 1, **characterized in that** the desired boost pressure is formed as a function of the desired intake-pipe pressure derived from the predetermined value, taking account of a desired pressure ratio.

3. Method according to one of the preceding claims, **characterized in that** the desired boost pressure, which is formed from the desired intake-pipe pressure and desired pressure ratio across the throttle valve, is corrected using the compensation factor.

4. Method according to either of Claims 2 and 3, **characterized in that** the corrected desired boost pressure is limited to a maximum value and/or a minimum value.

5. Method according to one of the preceding claims, **characterized in that** the compensation factor serves to correct the desired setting value for the throttle valve, and/or to correct the airflow calculated as a function of the throttle valve position.

6. Method according to one of the preceding claims, **characterized in that** the measured airflow is the mass flow of air supplied as measured by an air mass flow meter, and the airflow across the throttle valve is the mass flow of air derived from the throttle valve position.

7. Device for controlling a turbocharged internal combustion engine, having a control unit which sets the air supply to the internal combustion engine and the boost pressure on the basis of predetermined values, the control unit comprising means which determine the flow of air across the throttle valve on the basis of the throttle-valve position and measure the flow of air fed to the internal combustion engine, with a factor being formed as a function of the deviation between the two airflow values, **characterized in that** the control unit comprises means which take the factor into account when controlling the boost pressure.

8. Computer program having programming code means for carrying out all the steps from each of Claims 1 to 5 when the program is run on a computer.

9. Computer program product having programming code means which are stored on a computer-readable data carrier in order to carry out the method according to one of Claims 1 to 5 when the program product is run on a computer.

## Revendications

1. Procédé de commande d'un moteur à combustion interne suralimenté, dans lequel la position du papillon des gaz est réglée en fonction d'une valeur définie et la pression d'alimentation est commandée en fonction d'une pression de consigne, le flux d'air vers le moteur à combustion interne étant par ailleurs déterminé par le papillon des gaz et le flux d'air amené étant mesuré, en déterminant un facteur qui est fonction de l'écart entre le flux d'air calculé sur le papillon des gaz et le flux d'air mesuré,
**caractérisé en ce que**
ce facteur est pris en compte lors de la commande de la pression d'alimentation.

2. Procédé selon la revendication 1,
**caractérisé en ce que**
la pression d'alimentation de consigne est formée en fonction de la pression de tube d'aspiration de consigne déduite de la valeur définie, en tenant compte d'un rapport de pression de consigne.

3. Procédé selon l'une quelconque des revendications précédentes,
**caractérisé en ce que**
la pression d'alimentation de consigne formée à partir de la pression de tube d'aspiration de consigne et du rapport de pression de consigne sur le papillon des gaz est corrigée par le facteur d'équilibrage.

4. Procédé selon l'une quelconque des revendications 2 ou 3,
**caractérisé en ce que**
la pression d'alimentation de consigne corrigée est limitée à une valeur maximale et/ou une valeur minimale.

5. Procédé selon l'une quelconque des revendications précédentes,
**caractérisé en ce que**
le facteur d'équilibrage sert à corriger la valeur de réglage de consigne pour le papillon des gaz et/ou à corriger le flux d'air calculé en fonction de la position du papillon des gaz.

6. Procédé selon l'une quelconque des revendications précédentes,
**caractérisé en ce que**
le flux d'air mesuré est le flux massique d'air amené mesuré par un capteur de masse d'air, le flux d'air sur le papillon des gaz étant le flux massique d'air déduit de la position du papillon des gaz.

7. Dispositif de commande d'un moteur à combustion interne suralimenté, comprenant une unité de commande, qui à partir de valeurs définies règle l'amenée d'air vers le moteur à combustion interne et la pression d'alimentation, l'unité de commande comprenant des moyens qui, sur la base de la position du papillon des gaz, déterminent le flux d'air sur le papillon des gaz et mesurent le flux d'air amené vers le moteur à combustion interne, un facteur étant formé en fonction de l'écart entre les deux valeurs de flux d'air,
**caractérisé en ce que**
l'unité de commande comprend des moyens qui tiennent compte du facteur lors de la commande de la pression d'alimentation.

8. Programme informatique comprenant des moyens de codage de programme pour réaliser toutes les étapes de chacune des revendications 1 à 6 lorsque le programme est exécuté sur un ordinateur.

9. Produit de programme informatique comprenant des moyens de codage de programme enregistrés sur un support de données lisible par ordinateur, pour réaliser le procédé selon l'une quelconque des revendications 1 à 6 lorsque le programme est exécuté sur un ordinateur.
